# EUROPEAN PATENT SPECIFICATION

(11) **EP 2 033 118 B1**
(45) Date of publication and mention of the grant of the patent: **22.11.2017**
(21) Application number: 07809358.0
(22) Date of filing: 06.06.2007
(51) Int. Cl.: G05D 1/00, G05D 1/02, G06F 17/00, G05B 9/03

(54) **MULTIPLE-MODE SYSTEM WITH MULTIPLE CONTROLLERS**
MULTIMODALES SYSTEM MIT MEHREREN KONTROLLEINHEITEN
SYSTÈME À PLUSIEURS MODES AVEC MULTIPLES DISPOSITIFS DE COMMANDE

(30) Priority: 14.06.2006 US 452733
(43) Date of publication of application: 11.03.2009
(73) Proprietor: Deere & Company, Moline, IL 61265 (US)
(72) Inventor: NORRIS, William, Robert, Rock Hill, SC 29732 (US)
(74) Representative: Holst, Sönke
(86) International application number: PCT/US2007/013323
(87) International publication number: WO 2007/145998

(56) References cited:
- WO-A1-2005/103848
- WO-A2-2006/058125
- US-A- 4 638 227
- US-A- 6 122 936
- US-A1- 2002 022 909
- US-A1- 2003 083 782
- US-A1- 2005 027 406

## Description

### Field of the Invention

The present invention relates to a system and method for intelligent mobile equipment that can be used in unmanned or manned modes, the system having a plurality of controllers.

### Background of the Invention

There is an increasing trend towards automated or semi-automated equipment being developed for a variety of uses, rather than the operator-controlled equipment that was previously used. In some situations, these are completely different equipment from what were previously used, and do not allow for any situations in which an operator can be present on or take over operation of the equipment. Such unmanned equipment is not always very reliable, based on the complexity of systems involved, the current status of computerized control, and uncertainty in various operating environments. Therefore, what is more commonly seen is a piece of equipment similar to previous operator-controlled equipment that also incorporates one or more operations that are automated, rather than operator-controlled. These types of equipment allow for more supervision and the ability of the operator to take over control when desirable or necessary.

US 6 122 936 A describes an apparatus for interconnecting optical fibers. A camera is connected to a vision control system, which is connected to a supervisory controller that is also connected via host computer to a robot controller that controls movement of a robot. The camera thus looks onto the robot and controls its movement via the supervisory controller and the host computer. This architecture is arranged to reduce the risk of total machine failure since if any part fails; the remaining portions will still work in a semi-automated mode.

Because of the more complex systems involved in unmanned robotic-control equipment, failures are more likely, and therefore the ability to provide at least some capability for operator control is preferable. In such situations, depending on the failures that occur, the operator may have only limited ability to perform various actions. In particular, the complex control systems required for automated operation cannot always be easily adapted to revert to operator-control.
Therefore, what is needed is a system that allows for automated control, but provides a quick and easy method for an operator to assume control of the mobile equipment in situations where the automated control system fails or experiences faults. WO2005/103848 describes a control system for a mobile autonomous system.

### Summary of the Invention

The present invention, accordingly, provides a method and system for both automated and manual control of a mobile vehicle, providing for the ability to manually control the vehicle even when the automated control system experiences failures or faults. This is achieved by providing dual processors for controlling the system: one controller is a high-level, or automated controller, and the second controller, which is not just a redundant control system, is a low-level controller that serves as a supervisory controller for the vehicle and performs vehicle-specific control functions. In the event of a failure or fault in the high-level controller, or operations controlled by the high-level controller, or if fully manual control is implemented, the low-level controller can be used for manual operation of the vehicle. An interface layer translates information communicated between the first and second controllers. The interface layer takes the high-level processing information from the second controller and breaks it down to low-level commands for the first controller. These low-level commands are simulating operator actions. The first controller then translates the low-level commands into commands that can provide vehicle control. The vehicle guidance module is arranged to receive information about the vehicle including control feedback, vehicle state information and vehicle specific information from the first controller via the interface layer. By careful division of feature control into the high-level controller and low-level controller, avoidance of unnecessary duplication is achieved, reducing system cost. Such division can also enable using or reusing controller components in different equipment, or different types of equipment, thus reducing costs. Additionally, providing control of the automated functions in a separate controller can enable unmanned robotic equipment control to be an add-on feature, initially or at a later time.

### Brief Description of the Drawings

For a more complete understanding of the present invention, and the advantages thereof, reference is now made to the following descriptions taken in conjunction with the accompanying drawings, in which:
FIGURE 1 is a schematic representation of a system of the present invention for controlling a moving object;
FIGURE 2 is a block diagram of communications between the various controllers of the present invention;
FIGURE 3 is a representation of a typical dual-controller system of the present invention;
FIGURE 4 is a schematic representation of an exemplary system for controlling moving objects of the present invention;
FIGURE 5A is a schematic representation showing interchangeability of parts of the dual-controller system of the present invention between different vehicles; and
FIGURE 5B is a schematic representation showing transfer of data from one dual-controller system of the present invention to a different dual-controller system of the present invention.

### Description of the Preferred Embodiment

In the discussion of the FIGURES the same reference numerals will be used throughout to refer to the same or similar components. In the interest of conciseness, various other components known to the art, such as computer processing and storage mechanisms and the like necessary for the operation of the invention, have not been shown or discussed, or are shown in block form.

In the following, numerous specific details are set forth to provide a thorough understanding of the present invention. However, it will be obvious to those skilled in the art that the present invention may be practiced without such specific details. In other instances, well-known elements have been illustrated in schematic or block diagram form in order not to obscure the present invention in unnecessary detail. Additionally, for the most part, details concerning computer and database operation and the like have been omitted when such details are not considered necessary to obtain a complete understanding of the present invention, and are considered to be within the knowledge of persons of ordinary skill in the relevant art.

In the discussion that follows, the phrase "vehicle" means any piece of mobile equipment, having a broader definition than just equipment that operates on the ground with wheels having a portion thereof dedicated to space for an operator to stand or sit while controlling operation thereof.

Refer now to the drawings wherein depicted elements are, for the sake of clarity, not necessarily shown to scale and wherein like or similar elements are designated by the same reference numeral through the several views.

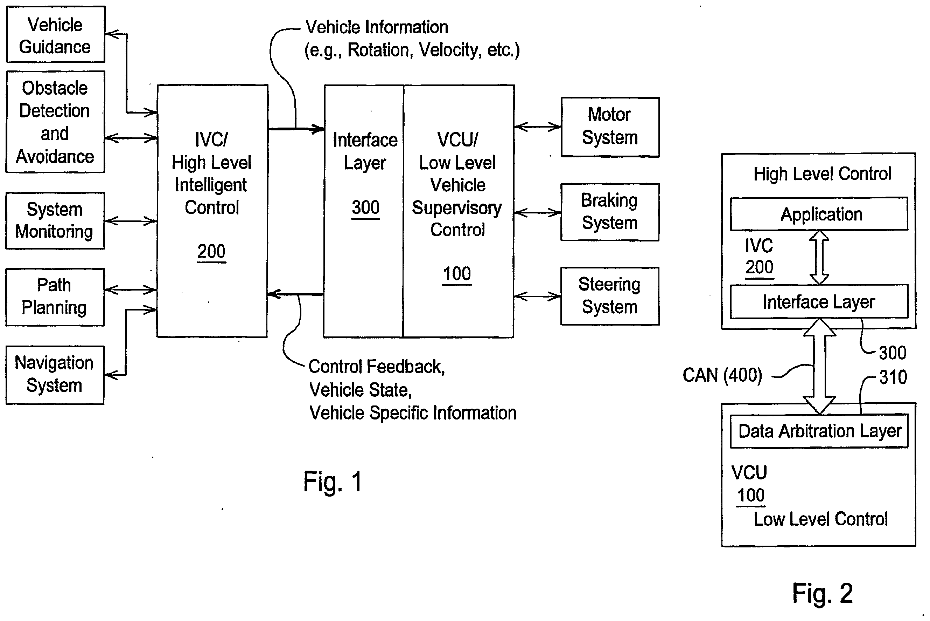

FIG. 1 shows a system 1 of the present invention for controlling a moving object, or vehicle. The system includes a Vehicle Control Unit (VCU) controller 100 for control of low-level functions and to provide vehicle supervisory control. The VCU 100 performs traditional vehicle safety and control functions, and is responsible for coordinating low-level vehicle control tasks and managing the loop of the low-level physical interfaces, such as communication with the motor, steering system, braking system, throttle, hydraulics, etc. Because the information being processed in the VCU 100 is typically not high-volume and does not require continuous rapid and complex calculations, it may be possible that the microprocessor used, while capable of performing the arithmetic and logic operations required, can be a less expensive device, which can reduce system costs.

The system 1 of the present invention also incorporates an Intelligent Vehicle Control controller (IVC) 200, a high-level intelligent controller that controls high-level unmanned, robotic vehicle operations, including such items as obstacle detection and avoidance features, path planning, vehicle guidance, sensor integration, system monitoring, and navigation and localization functions. Because of the volume of information processed and analyzed, the IVC 200 typically incorporates a high-speed, powerful microprocessor capable of performing rapid complex calculations for arithmetic and logic operations.

As shown in FIG. 2, typically, there is at least one translation or interface layer 300 that takes the high-level processing information and breaks it down to low-level commands, simulating operator actions. This can be done in a variety of ways, with the two most common being a virtual operator interface, such as a simulated control. In this type of system, the IVC 200 virtually controls the vehicle, with commands that imitate those of a physical interface. Another approach is for the high-level commands from the IVC 200 to be sent to the VCU 100. The VCU 100 then translates the commands into commands that can provide vehicle control. Depending on the type of system utilized, the translation layer 300 can reside in the IVC 200, the VCU 100, or both for systems with more than one translation layer 300. In the arrangement shown in FIG. 2, the Interface Layer 300, which resides on the IVC 200, converts IVC outputs to values having units used and accepted by the data arbitration layer 310 on the VCU 100, and sends and receives messages over the communication network 400, which in this case is a CAN bus network. However, it can be appreciated that other arrangements of the communication systems can be used.

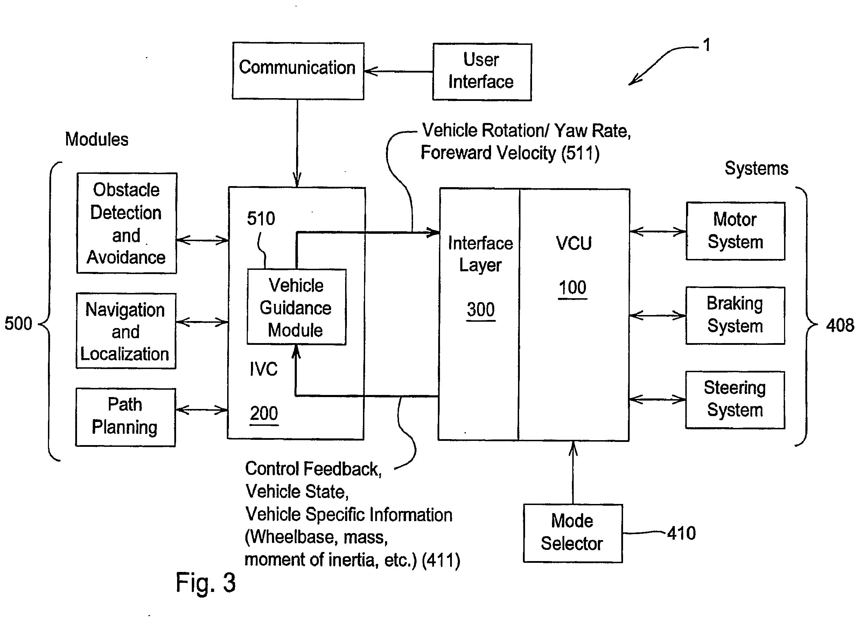

FIG. 3 is a representation of a typical dual-controller system 1 of the present invention. The system includes an IVC 200, which has, or communicates with modules 500 responsible for navigation and localization, obstacle detection and avoidance, path planning and vehicle guidance for unmanned robotic operation. The vehicle guidance module 510 also provides information 511 about vehicle movement, such as rotation and yaw rate and forward velocity to the interface layer 300, which is located in the VCU 100. The VCU 100 is responsible for operation of the steering, propulsion and braking systems 408 of the vehicle 10. The mode selector 410 provides input to the VCU 100 as to whether the vehicle 10 is operating in unmanned robotic or manual mode. In addition to controlling the steering, propulsion and braking system, the VCU 100 also provides information about the vehicle 10 to the IVC 200 via the interface layer 300. Such information includes, but is not limited to, control feedback, vehicle state information, and vehicle specific information such as the vehicle mass, moment of inertia. etc.

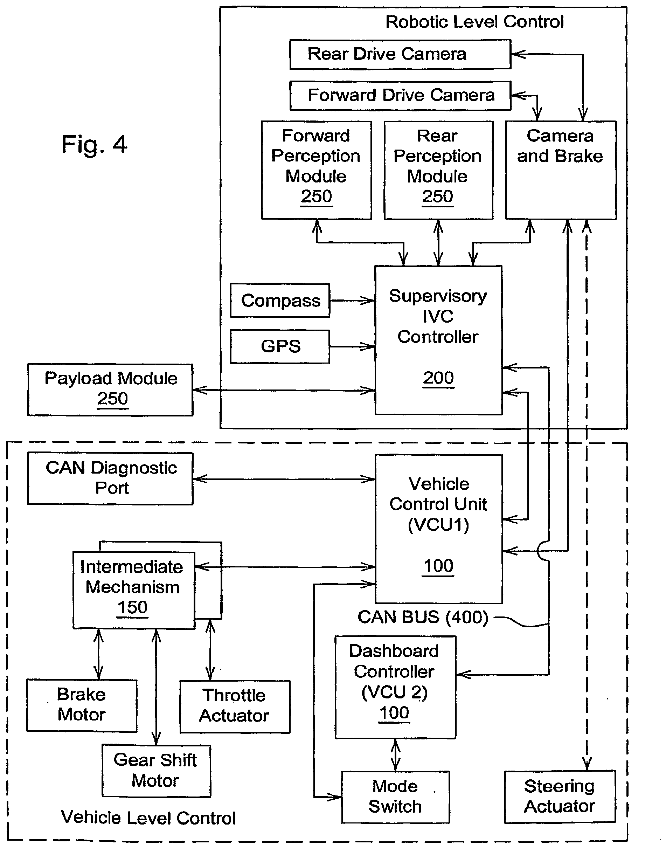

FIG. 4 discloses an example of a system 1 of the present invention. In this example, a vehicle has a dual controller of the present invention. The system 1 has a VCU 100 that is responsible for controlling lighting, steering, the throttle actuator, gear shift motor and brake motor, with intermediate mechanisms 150 for controlling the motors and throttle. The system 1 has a secondary VCU 100' located in the operator compartment of the vehicle that provides an interface for the vehicle operator. The system 1 also has an IVC 200 that is used to control the vehicle when it is being operated as an unmanned robotic vehicle. In this example, the IVC 200 interfaces with various positioning and perception modules 250 that are used to determine the position of the vehicle, and to scan the area around the vehicle and identify any obstructions in the path of the vehicle and determine if the obstruction should be avoided when the vehicle is being operated in unmanned robotic mode. These modules 250 are used to determine a path, speed and parameters for the vehicle when it is being operated as an unmanned robotic vehicle. In operation, if the vehicle is operating in an unmanned robotic mode, the IVC 200 is controlling vehicle motion. If the IVC 200 should malfunction, or if the IVC 200 should perceive that the vehicle should not proceed in any direction, it will send a signal to the VCU 100 that it is not capable of operating, and will turn over control of the vehicle to the VCU 100. The VCU 100 does not have the equipment necessary to operate the vehicle 10 autonomously. However, it or the IVC 200 can send a message to the operator that operation of the vehicle has been transferred to the VCU 100. The operator can then operate the vehicle manually via the VCU 100, completing the operation that was being performed by the IVC 200, or bringing the vehicle to a safe location where it can be shut down and repaired.

Another advantage of the present invention is that the separation of high-level and low-level control functions into two separate and distinct controllers is the simplification of repairs and system upgrades. If a system that has a VCU 100 but is not initially outfitted with a IVC 200, is subsequently desired to be used as an unmanned robotic system, then depending on the arrangement and configuration of the VCU 100 in the original system, an IVC 200 can be added on and connected into the VCU 100 via the CAN Bus 400, and the system 1 can become a system that has both manual and automated functions. Another improvement achieved by the modular system 1 of the present invention is simplification of repairs. If a system of the present invention experiences a failure of the IVC 200, the system can be operated in manual or semi-automated mode using just the VCU 100. This can be achieved by the system 1 recognizing the IVC failure and sending a signal to the VCU 100 to function without the IVC, or such override can be achieved manually by an operator input. After properly shutting down the system, the IVC unit 200 can be removed and replaced with a new IVC 200, without the need to replace the VCU 100 or various individual components. Any vehicle-specific programming in the IVC 200 can be downloaded to the new IVC 200, or in some arrangements of the present invention, such vehicle-specific data is stored in the VCU 100 to further enable such quick and easy repairs.

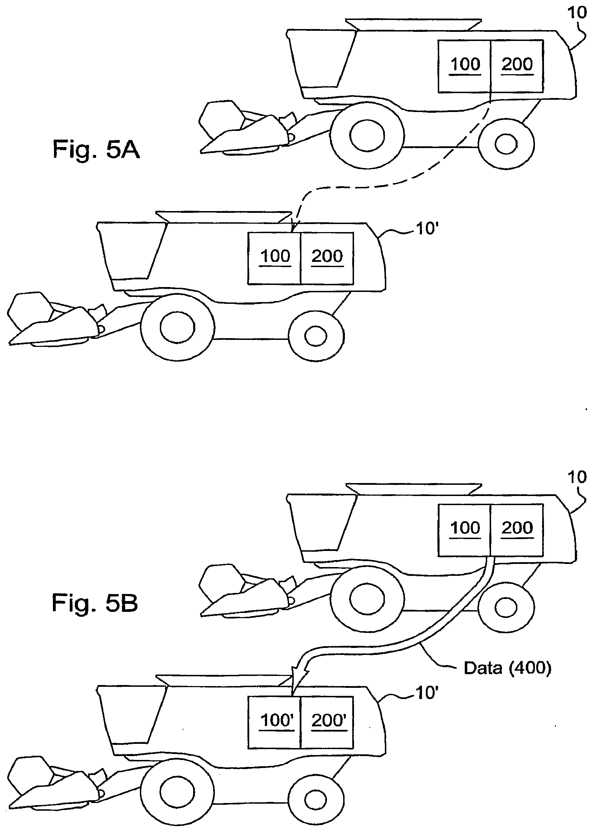

Yet another improvement achieved by the modularity of the present invention is the ability to move individual controllers from one system to another. For example, as shown in FIG. 5A an unmanned robotic vehicle 10 is used in a specific operation, and the vehicle 10 has acquired certain mission-specific knowledge related to the operation. If a new vehicle 10' is to be used in the same operation to replace the first vehicle 10, the controller or controllers 100, 200 from the first vehicle 10 may be removed from the first vehicle 10 and installed in the second vehicle 10' to enable the second vehicle 10' to perform the operations. It can be appreciated that certain minor modifications or machine-learning may be required to ensure the second vehicle 10' performs the operation satisfactorily, especially if the second vehicle 10' differs from the first vehicle 10 in any characteristics. Similarly, as shown in FIG. 5B, if a new vehicle 10' is to be used to perform a similar operation to that performed by a first vehicle 10 that has already learned the operation, data can be transferred via the CAN bus 400 from the controller or controllers 100, 200 of the first vehicle 10 to the controller or controllers 100', 200' of the second vehicle 10', which can significantly reduce the time needed to train the second vehicle 10' to perform the same operations already learned by the first vehicle 10.

It is understood that the present invention can take many forms and embodiments. Accordingly, several variations may be made in the foregoing without departing from the scope of the invention. Having described the preferred embodiment, it will become apparent that various modifications can be made without departing from the scope of the invention as defined in the accompanying claims.

## Claims

1. A control system (1) for controlling a vehicle, the control system (1) capable of performing arithmetic and logic operations, the control system (1) comprising:
at least two controllers (100, 200) for controlling the vehicle, including a first controller (100) comprising at least a microprocessor that controls at least some vehicle functions and provides object supervisory control and a second controller (200) comprising at least a microprocessor that controls at least some unmanned robotic vehicle operations, the second controller (200) comprising a vehicle guidance module (510),
at least one interface layer (300) for translating information (411, 511) that is communicated between the first and second controllers (100, 200), the interface layer (300) arranged to take the high-level processing information (411) from the second controller (200) and break it down to low-level commands for the first controller (100) which are simulating operator actions, the first controller (100) then translating the low-level commands into commands that can provide vehicle control;
wherein the vehicle guidance module (510) is arranged to receive information (411) about the vehicle including control feedback, vehicle state information and vehicle specific information from the first controller (100) via the interface layer (300);
and the first controller (100) is capable of providing control for the vehicle sufficient to move the vehicle by manual operator control if the second controller (200) is incapable of normal operation.

2. A vehicle with a control system according to claim 1.

3. A method of controlling a vehicle capable of movement comprising:
providing at least two microprocessor-based controllers (100, 200) for controlling the vehicle, the first controller (100) capable of providing supervisory vehicle control and performing some vehicle functions, the second controller (200) controlling at least some unmanned robotic vehicle operations and comprising a vehicle guidance module (510);
providing an interface layer (300) for translating information (411, 511) communicated between the first and second controllers (100, 200), the interface layer (300) taking the high-level processing information from the second controller (200) and breaking down to low-level commands for the first controller (100) which are simulating operator actions, the first controller (100) then translating the low-level commands into commands that can provide vehicle control;
providing a communication network that transmits information from the first and second controllers (100, 200) to the vehicle so as to control vehicle movement;
the vehicle guidance module (510) receiving information (411) about the vehicle including control feedback, vehicle state information and vehicle specific information from the first controller (100) via the interface layer (300);
dividing operations controlled between the first and second controllers (100, 200) such that if the second controller (200) experiences a failure or fault, the first controller (100) can control manual vehicle operation by an operator input.

## Patentansprüche

1. Steuersystem (1) zum Steuern eines Fahrzeugs, wobei das Steuersystem (1) imstande ist, arithmetische und logische Operationen durchzuführen, das Steuersystem (1) umfassend:
mindestens zwei Steuerungen (100, 200) zum Steuern des Fahrzeugs, enthaltend eine erste Steuerung (100), umfassend mindestens einen Mikroprozessor, der mindestens einige Fahrzeugfunktionen steuert und Objektüberwachungssteuerung bereitstellt, und eine zweite Steuerung (200), umfassend mindestens einen Mikroprozessor, der mindestens einige Operationen eines unbemannten Roboterfahrzeugs steuert, wobei die zweite Steuerung (200) ein Fahrzeugführungsmodul (510) umfasst,
mindestens eine Schnittstellenschicht (300) zum Übersetzen von Informationen (411, 511), die zwischen der ersten und der zweiten Steuerung (100, 200) kommuniziert werden, wobei die Schnittstellenschicht (300) angeordnet ist, die Verarbeitungsinformationen auf hohem Niveau (411) von der zweiten Steuerung (200) zu nehmen und sie zu Befehlen auf niedrigem Niveau für die erste Steuerung (100) zu zerlegen, die Anwenderaktionen simulieren, wobei die erste Steuerung (100) die Befehl auf niedrigem Niveau dann in Befehle übersetzt, die Fahrzeugsteuerung bereitstellen können;
wobei das Fahrzeugführungsmodul (510) angeordnet ist, Informationen (411) über das Fahrzeug, die Steuerungsrückmeldung, Fahrzeugzustandsinformationen und fahrzeugspezifische Informationen enthalten, von der ersten Steuerung (100) über die Schnittstellenschicht (300) zu empfangen;
und die erste Steuerung (100) imstande ist, Steuerung für das Fahrzeug bereitzustellen, die ausreichend ist, das Fahrzeug durch manuelle Anwendersteuerung zu bewegen, wenn die zweite Steuerung (200) nicht zu normaler Operation imstande ist.

2. Fahrzeug mit einem Steuersystem nach Anspruch 1.

3. Verfahren zum Steuern eines Fahrzeugs, das zur Bewegung imstande ist, umfassend:
Bereitstellen von mindestens zwei mikroprozessorbasierten Steuerungen (100, 200) zum Steuern des Fahrzeugs, wobei die erste Steuerung (100) imstande ist, überwachende Fahrzeugsteuerung bereitzustellen und einige Fahrzeugfunktionen durchzuführen, wobei die zweite Steuerung (200) mindestens einige Operationen eines unbemannten Roboterfahrzeugs steuert und ein Fahrzeugführungsmodul (510) umfasst;
Bereitstellen einer Schnittstellenschicht (300) zum Übersetzen von Informationen (411, 511), die zwischen der ersten und der zweiten Steuerung (100, 200) kommuniziert werden, wobei die Schnittstellenschicht (300) die Verarbeitungsinformationen auf hohem Niveau von der zweiten Steuerung (200) nimmt und sie zu Befehlen auf niedrigem Niveau für die erste Steuerung (100) zerlegt, die Anwenderaktionen simulieren, wobei die erste Steuerung (100) die Befehl auf niedrigem Niveau dann in Befehle übersetzt, die Fahrzeugsteuerung bereitstellen können;
Bereitstellen eines Kommunikationsnetzwerks, das Informationen von der ersten und der zweiten Steuerung (100, 200) an das Fahrzeug überträgt, um die Fahrzeugbewegung zu steuern;
wobei das Fahrzeugführungsmodul (510) Informationen (411) über das Fahrzeug, die Steuerungsrückmeldung, Fahrzeugzustandsinformationen und fahrzeugspezifische Informationen enthalten, von der ersten Steuerung (100) über die Schnittstellenschicht (300) empfängt;
Aufteilen von Operationen, die zwischen der ersten und der zweiten Steuerung (100, 200) gesteuert werden, so dass, wenn die zweite Steuerung (200) einen Ausfall oder Fehler erfährt, die erste Steuerung (100) die Fahrzeugoperation durch eine Anwendereingabe steuern kann.

## Revendications

1. Système de commande (1) destiné à commander un véhicule, le système de commande (1) étant capable de réaliser des opérations arithmétiques et logiques, le système de commande (1) comprenant :
au moins deux organes de commande (100, 200) permettant de commander le véhicule, incluant un premier organe de commande (100) comprenant au moins un microprocesseur qui commande au moins certaines fonctions de véhicule et assure une commande de surveillance d'objet, et un second organe de commande (200) comprenant au moins un microprocesseur qui commande au moins certaines opérations robotisées automatisées de véhicule, le second organe de commande (200) comprenant un module de guidage de véhicule (510) ;
au moins une couche d'interface (300) permettant de convertir des informations (411, 511) communiquées entre les premier et second organes de commande (100, 200), la couche d'interface (300) étant conçue pour prendre les informations de traitement de haut niveau (411) du second organe de commande (200) et les décomposer, pour le premier organe de commande (100), en commandes de bas niveau qui simulent des actions d'opérateur, le premier organe de commande (100) convertissant ensuite les commandes de bas niveau en commandes qui peuvent assurer une commande de véhicule ;
le module de guidage de véhicule (510) étant conçu pour recevoir des informations (411) sur le véhicule, incluant une rétroaction de commande, une information d'état de véhicule et une information spécifique de véhicule en provenance du premier organe de commande (100) par l'intermédiaire de la couche d'interface (300) ;
et le premier organe de commande (100) étant capable d'assurer une commande de véhicule suffisante pour déplacer le véhicule par une commande manuelle d'opérateur si le second organe de commande (200) n'est pas capable de fonctionner normalement.

2. Véhicule équipé d'un système de commande selon la revendication 1.

3. Procédé de commande d'un véhicule capable de se déplacer, le procédé consistant à:
fournir au moins deux organes de commande basés sur microprocesseur (100, 200) destinés à commander le véhicule, le premier organe de commande (100) étant capable d'assurer une commande de surveillance de véhicule et de réaliser certaines fonctions de véhicule, le second organe de commande (200) commandant au moins certaines opérations robotisées et automatisées de véhicule et comprenant un module de guidage de véhicule (510) ;
fournir une couche d'interface (300) permettant de convertir des informations (411, 511) communiquées entre les premier et second organes de commande (100, 200), la couche d'interface (300) prenant les informations de traitement de haut niveau du second organe de commande (200) et les décomposant, pour le premier organe de commande (100), en commandes de bas niveau qui simulent des actions d'opérateur, le premier organe de commande (100) convertissant ensuite les commandes de bas niveau en commandes qui peuvent assurer une commande de véhicule ;
fournir un réseau de communication qui transmet des informations des premier et second organes de commande (100, 200) au véhicule afin de commander le déplacement du véhicule ;
le module de guidage de véhicule (510) recevant des informations (411) sur le véhicule, incluant une rétroaction de commande, une information d'état de véhicule et une information spécifique de véhicule en provenance du premier organe de commande (100) par l'intermédiaire de la couche d'interface (300) ;
diviser les opérations commandées entre les premier et second organes de commande (100, 200) de sorte que si le second organe de commande (200) tombe en panne ou présente un dysfonctionnement, le premier organe de commande (100) puisse commander le fonctionnement manuel du véhicule par une entrée d'opérateur.
